(19) Europäisches Patentamt
European Patent Office
Office européen des brevets

(11) **EP 3 489 321 B1**

(12) **FASCICULE DE BREVET EUROPEEN**

(45) Date de publication et mention
de la délivrance du brevet:
**15.04.2020 Bulletin 2020/16**

(51) Int Cl.:
**C09K 8/08** *(2006.01)*        **C10M 173/00** *(2006.01)*
**B01F 17/00** *(2006.01)*

(21) Numéro de dépôt: **18211059.3**

(22) Date de dépôt: **09.08.2013**

(54) **COMPOSITIONS À BASE D'ALKYLPOLYGLYCOSIDES ET LEUR UTILISATION COMME AGENT LUBRIFIANT**

ZUSAMMENSETZUNGEN AUF DER BASIS VON ALKYLPOLYGLYKOSIDEN, UND IHR EINSATZ ALS SCHMIERMITTEL

COMPOSITIONS MADE OF ALKYLPOLYGLYCOSIDES AND THEIR USE AS A LUBRICATING AGENT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **14.09.2012 FR 1258648**

(43) Date de publication de la demande:
**29.05.2019 Bulletin 2019/22**

(62) Numéro(s) de document de la (des) demande(s) initiale(s) en application de l'article 76 CBE:
**13762161.1 / 2 895 572**

(73) Titulaire: **Société d'Exploitation de Produits pour les Industries Chimiques SEPPIC
75321 Paris cedex 07 (FR)**

(72) Inventeur: **GAYRAL CHIRAC, Marie-Françoise
81290 Viviers-les-Montagnes (FR)**

(74) Mandataire: **Laigneau, Amandine
L'Air Liquide
Direction Propriété Intellectuelle
75, Quai d'Orsay
75321 Paris Cedex 07 (FR)**

(56) Documents cités:
**WO-A1-93/07249          WO-A1-03/106584
WO-A1-2012/085391      WO-A1-2012/164190
US-A- 5 663 137          US-A- 5 734 029**

**EP 3 489 321 B1**

**Description**

La présente invention concerne de nouvelles compositions à base d'alkylpolyglycosides et leurs utilisations comme agent lubrifiant pour préparer lesdits fluides aqueux.

Les technologies de forage de formations souterraines sont mises en œuvre pour les étapes de prospection et de production dans les activités des industries pétrolières et gazières. Dans ce domaine technique, on entend :

- Par prospection, l'ensemble des activités visant à rechercher et à découvrir de nouveaux gisements de pétrole et de gaz naturel. Ces activités ont recours à des forages d'exploration pour confirmer la présence d'hydrocarbures et à des forages d'évaluation, qui permettent d'estimer la viabilité économique de l'exploitation du gisement découvert ;
- Par production, l'ensemble des activités visant à extraire les hydrocarbures de leur réservoir souterrain, et qui comprennent notamment des forages de puits.

Les techniques de forage les plus utilisées mettent en œuvre un fluide, dit fluide de forage, qui est un mélange complexe de différents composants liquides (eau, huile) et/ou gazeux (air ou gaz naturel), se présentant le plus souvent sous la forme d'émulsions et/ou de suspensions contenant d'autres additifs minéraux et organiques, comme par exemple des argiles, des polymères, des tensioactifs, des déblais et/ou des ciments.

Pendant l'opération de forage, le fluide de forage est mis en circulation continue tant dans la zone de fracturation de la roche qu'en surface. Il est préparé dans des bacs à boues, puis injecté à l'intérieur des tiges jusqu'à l'outil de coupe, et il remonte dans l'espace annulaire, chargé des déblais formés au front de taille. A la sortie du puits, le fluide de forage subit différents traitements, comme par exemple des étapes de tamisage, de dilution, d'ajout d'additifs chimique, dans le but d'éliminer les déblais transportés et de réajuster ses caractéristiques physico-chimiques à leurs valeurs initiales avant sa réutilisation. Le fluide de forage a pour fonctions :

- D'assurer la remontée des déblais du fond du puits jusqu'à la surface, par sa circulation dans l'espace annulaire de l'outil de coupe,
- De maintenir les déblais en suspension, lors d'un éventuel arrêt de sa circulation afin d'empêcher leur sédimentation, qui pourrait endommager l'outil de coupe lors de son redémarrage,
- De refroidir et de lubrifier l'outil de coupe afin d'éviter l'usure rapide des pièces métalliques en mouvement le constituant, et
- De maintenir les parois du puits dans un état stable de par sa densité et de par sa capacité à former sur la paroi une barrière limitant les transferts d'autres fluides, provenant des formations rocheuses traversées, vers l'annulaire de forage.

Le fluide de forage doit de plus être :

- Non corrosif et non abrasif vis-à-vis des outils de forage avec lesquels il est en contact,
- Non toxique ni dangereux pour le personnel qui le met en oeuvre ;
- Non dangereux pour l'environnement.

Les fluides de forage sont soit à base d'huile soit à base d'eau.

Les fluides de forage à base d'huile sont des fluides dont la phase continue est une huile minérale (pétrole brut, fuel, gazole, ...) et la phase dispersée de l'eau. Jusqu'à récemment, le gazole a été la phase continue la plus fréquemment utilisée pour préparer des fluides de forage à base d'huile. Les contraintes environnementales actuelles imposent sa substitution par des huiles minérales ou synthétiques exemptes de composés aromatiques. De plus ces mêmes contraintes accélèrent le remplacement des fluides de forage à base d'huile par des fluides de forage aqueux.

Les fluides de forage à base d'eau, dits fluides de forages aqueux, sont des fluides de forage dont la phase continue est de l'eau qui selon les conditions d'utilisation peut-être de l'eau douce, de l'eau de mer, des saumures ou leurs mélanges, et la phase dispersée est une huile et/ou un ou plusieurs solides de nature minérale. Ils comprennent aussi une quantité importante de sels inorganiques et/ou organiques ainsi que différents additifs dont la constitution est susceptible d'apporter au fluide de forage à base d'eau une quantité de sels inorganiques et/ou organiques supplémentaire.

Cependant, ces fluides de forage aqueux, ne sont intrinsèquement lubrifiants. Pour éviter qu'ils provoquent l'usure prématurée de l'outil de forage ou son blocage, il est nécessaire d'y incorporer un agent lubrifiant comme les matières grasses.

Le brevet américain US 5,837,655 divulgue ainsi des fluides de forage à base d'eau comprenant des paraffines linéaires et/ou branchées et/ou cycliques comportant de 8 à 28 atomes de carbone.

La demande internationale publiée sous le numéro WO 2007/146067 A2 divulgue l'utilisation de phases grasses comprenant des mono-alkyl esters d'acide gras, répondant à la définition de « B100 biodiesel » selon la norme ASTM Standard No D6751-07a, pour préparer des fluides de forage aqueux de façon à leur conférer notamment des propriétés lubrifiantes.

La demande de brevet américain publiée sous le numéro US 2005/0197255 A1 divulgue l'utilisation de sels métalliques d'acides gras, comme par exemple l'acide stéarique, comme agent lubrifiant pour préparer des fluides de forage aqueux pouvant contenir des saumures.

La demande internationale publiée sous le numéro WO 00/29519 A1 divulgue des fluides de forage aqueux comprenant pour améliorer leur caractère lubrifiant, une composition à base d'huiles, d'un tensioactif non ionique comme par exemple un glycol polyalkoxylé, d'un ester et d'un polypropylène glycol.

Le brevet américain US 5,007,489 divulgue des fluides de forage aqueux comprenant de l'eau ou une saumure, des polyglycols insolubles dans l'eau de poids moléculaires compris entre 1.200 et 10.000 g.mol$^{-1}$, au moins un agent émulsionnant et un agent hydrotrope.

Cependant, les agents lubrifiants précédemment décrits sont insolubles ou très faiblement solubles dans l'eau et dans les saumures, ce qui rend difficile leur mise en œuvre en dispersion et ce qui induit des phénomènes de déphasage au stockage desdits fluides de forage aqueux.

Pour améliorer la dispersion de ces matières grasses utilisées comme agents lubrifiants pour la préparation de fluides de forage à base d'eau, on utilise de préférence des agents tensioactifs. Le brevet américain publié sous le numéro US 5,807,811 divulgue ainsi l'utilisation de matières grasses consistant en un mélange de triglycérides, d'acides carboxyliques gras et d'oléfines en présence d'un ester de phosphite et d'un émulsionnant dérivé de l'acide succinique, se présentant sous la forme d'une émulsion de type huile-dans-eau, dont la stabilité au stockage est limitée dans le temps.

La demande de brevet américain publiée sous le numéro US 2003/0232726 A1 divulgue un procédé de forage de formations souterraines mettant en œuvre un fluide de forage aqueux comprenant des silicates et un agent lubrifiant comprenant comme matières grasses des alcools faiblement hydrosolubles, choisis de préférence parmi les éléments du groupe constitué par le 2-octyldodécanol, l'alcool oléique, l'alcool stéarylique et les polyétherglycols (PEG), et un alkylpolyglycoside, choisi de préférence parmi les éléments du groupe constitué par le butylglucoside, l'hexylglucoside, le 2-éthylhexyl glucoside. Cependant, ni ces compositions, ni les fluides de forage aqueux en comprenant ne sont stables au stockage, car on observe un déphasage dès que l'on cesse de les agiter. Il existe donc un besoin de disposer d'une composition :

- qui reste homogène après une période de stockage,
- qui montre des propriétés lubrifiantes performantes,
- qui possède des propriétés inhibitrices de gonflement des argiles,

comme additif aux fluides de forage aqueux.

C'est pourquoi l'invention a pour un objet une composition ($C_{21}$) comprenant pour 100% de sa masse :

- De 5% à 100% massique d'un mélange ($M_1$) consistant en, pour 100% de sa masse :

    - De 25% à 78% massique d'une composition ($C_1$) représentée par la formule (I) :

$$R_1\text{-}Q\text{-}(G_1)_p\text{-}H \qquad (I)$$

    dans laquelle $R_1$ représente le radical heptyle ou le radical 2-éthyl hexyle, $G_1$ représente le reste d'un sucre réducteur et $p$ représente un nombre décimal supérieur ou égal à 1,05 et inférieur ou égal à 5, ladite composition ($C_1$) consistant en un mélange de composés représentés par les formules ($I_1$), ($I_2$), ($I_3$), ($I_4$) et ($I_5$) :

$$R_1\text{-}O\text{-}(G_1)_1\text{-}H \qquad (I_1),$$

$$R_1\text{-}O\text{-}(G_1)_2\text{-}H \qquad (I_2),$$

$$R_1\text{-}O\text{-}(G_1)_3\text{-}H \qquad (I_3),$$

$$R_1\text{-}O\text{-}(G_1)_4\text{-}H \qquad (I_4),$$

$$R_1\text{-}O\text{-}(G_1)_5\text{-}H \qquad (I_5),$$

dans les proportions molaires respectives $a_1$, $a_2$, $a_3$, $a_4$ et $a_5$, telles que la somme : $a_1 + a_2 + a_3 + a_4 + a_5$ est

égale à 1 et la somme $a_1 + 2a_2 + 3a_3 + 4a_4 + 5a_5$ est égale à p ;dans laquelle $R_1$ représente le radical heptyle ou le radical 2-éthyl hexyle,

- De 20% à 50% massique d'une composition $(C_1)$ représentée par la formule (I) dans laquelle $R_1$ représente le radical décyle,
- De 1% à 15% massique d'une composition $(C_1)$ représentée par la formule (I) dans laquelle $R_1$ représente le radical dodécyle, et
- De 1% à 10% massique d'une composition $(C_1)$ représentée par la formule (I) dans laquelle $R_1$ représente le radical tétradécyle.

- De 0% à 95% massique d'eau.

Selon un aspect plus particulier, la composition aqueuse $(C_{21})$ objet de la présente invention, comprend pour 100% de sa masse :

- De 40% à 100% massique dudit mélange $(M_1)$,
- De 0% à 60% massique d'eau.

Selon un autre aspect plus particulier, la composition $(C_{21})$ telle que définie précédemment, comprend en outre, pour 100% de sa masse, de 0,1% à 30% massique, plus particulièrement de 0,1% à 20% massique d'au moins un agent auxiliaire choisi parmi l'érythritol, le xylitol, le sorbitol, le gluconate de sodium, le glucose et les maltodextrines.
Par maltodextrines, on désigne les produits résultant de l'hydrolyse d'un amidon tels que précédemment définis, et plus particulièrement les maltodextrines se caractérisant par un D.E. supérieur ou égal à 2 et inférieur ou égal à 20.
Selon un autre aspect plus particulier l'agent auxiliaire compris dans la composition $(C_{21})$ est le sorbitol.
L'invention a également pour objet l'utilisation de la composition $(C_{21})$, telle que définie précédemment, comme agent lubrifiant pour préparer une composition aqueuse (C), ladite composition (C) comprenant pour 100% de sa masse :

- De 1% à 65% massique d'au moins un sel (S) constitué par au moins un cation choisi parmi l'ion ammonium et les cations métalliques, et au moins un anion choisi parmi les ions chlorure, bromure, carbonate, bicarbonate, hydrogénocarbonate, silicate, métasilicate, sulfate, hydrogénosulfate, borate, tétraborate, dihydrogénoborate, hydrogénoborate, hydrogénotétraborate, ou les anions organiques portant une fonction carboxylate ;
- De 0,05% à 2% massique d'au moins un agent anti-mousse,
- De 13% à 97,95% massique d'eau et
- De 1% à 20% massique de ladite composition $(C_{21})$ ;

et plus particulièrement, l'utilisation telle que définie ci-dessus. pour laquelle dans ladite composition (C), le sel (S) est choisi parmi le chlorure de sodium, le chlorure de potassium, le chlorure de calcium, le carbonate de potassium, le bromure de calcium, le bromure de zinc, le silicate de sodium, le métasilicate de sodium ou le tétraborate de sodium.
Par sucre réducteur, on désigne dans la définition de la composition $(C_1)$ représentée par la formule (I), les dérivés saccharidiques sans liaison glycosidique établie entre un carbone anomérique et l'oxygène d'un groupement acétal, tels qu'ils sont définis dans l'ouvrage de référence : "Biochemistry, Daniel Voet/Judith G. Voet, p. 250, John Wyley & Sons, 1990."
La structure oligomérique $(G_1)_p$, peut se présenter sous toutes formes d'isoméries, qu'il s'agisse d'isomérie optique, d'isomérie géométrique ou d'isomérie de position ; elle peut aussi représenter un mélange d'isomères.
Dans la formule (I) telle que définie ci-dessus, le groupe $R_1$ est lié à $G_1$ par le carbone anomérique du reste saccharide, de manière à former une fonction acétal.
Selon un aspect particulier, dans la formule (I) $G_1$ représente le reste d'un sucre réducteur choisi parmi les restes du glucose, du dextrose, du saccharose, du fructose, de l'idose, du gulose, du galactose, du maltose, de l'isomaltose, du maltotriose, du lactose, du cellobiose, du mannose, du ribose, du xylose, de l'arabinose, du lyxose, de l'allose, de l'altrose, du dextrane ou du tallose.
Selon un aspect plus particulier, dans la formule (I) $G_1$ représente le reste d'un d'un sucre réducteur choisi parmi les reste du glucose, du xylose et de l'arabinose.
Selon un autre aspect plus particulier dans la formule (I), p représente un nombre décimal supérieur ou égal à 1,05 et inférieur ou égal à 2,5, plus particulièrement supérieur ou égal à 1,05 et inférieur ou égal à 2,0, et encore plus particulièrement supérieur ou égal à 1,25 et inférieur ou égal à 2,0.
La composition $(C_1)$, représentée par la formule (I) telle que définie précédemment, est préparée par le procédé comportant:

- Une étape a) de réaction sous agitation mécanique, d'un sucre réducteur avec un excès d'alcool de formule (II) telle que définie précédemment, ou d'un mélange d'alcools de formule (II), généralement en présence d'un système catalytique acide, en maîtrisant le rapport stœchiométrique entre les deux réactants, dans des conditions de température et de vide partiel prédéterminées, par exemple à une température comprise entre 70°C et 130°C et sous un vide partiel compris entre 300 mbar ($3.10^4$ Pa) et 20 mbar ($2.10^3$ Pa), pour former un mélange de composés représentés par les formules ($I_1$), ($I_2$), ($I_3$), ($I_4$) et ($I_5$) telle que définies précédemment, et optionnellement d'un excès de l'alcool de formule (II) ou du mélange d'alcools de formule (II) ; si nécessaire ou si désiré

- Une étape b) d'élimination de l'alcool de formule (II), ou du mélange d'alcools de formule (II), n'ayant pas réagi au cours de l'étape a), si nécessaire ou si désiré,

Un tel procédé de préparation peut être complété, si nécessaire ou si désiré, par des opérations de neutralisation, de filtration et de décoloration.

Par système catalytique acide, on désigne, dans l'étape a) du procédé défini ci-dessus les acides forts comme l'acide sulfurique, l'acide chlorhydrique, l'acide phosphorique, l'acide nitrique, l'acide méthanesulfonique, l'acide (para-toluène) sulfonique, l'acide (trifluorométhane) sulfonique, ou les résines échangeuses d'ions.

Au cours de l'étape b) du procédé tel que défini ci-dessus, L'alcool de formule (II) ou le mélange d'alcools de formule (II) est éliminé selon des méthodes connues de l'homme du métier comme par exemple, par distillation, telle que la distillation dur film à couche mince, la distillation moléculaire ou l'extraction par solvants.

**A- Préparation de compositions (C) selon l'invention**

**A - 1) Compositions (C) dans lesquelles le sel (S) est le chlorure de calcium**

Chacune des compositions est préparée selon le même mode opératoire suivant :

- La quantité d'eau souhaitée est introduite sous agitation dans un réacteur maintenu à 10°C ; suivie de la quantité de chlorure de calcium souhaitée puis le mélange résultant agité pendant 30 minutes. Les autres ingrédients sont alors ajoutés successivement à 20°C et le tout agité jusqu'à obtention d'une solution limpide.

Les proportions, en pourcentage massiques, des constituants des compositions (C) ainsi obtenues, dénommées ci-après ($F_{13}$), ($F_{14}$), ($F_{15}$), ($F_{16}$) et ($F_{17}$), ainsi que des compositions ($F_{11}$), ($F_{12}$) et ($F_{18}$), selon l'état de la technique, sont consignées dans le tableau 2 ci-dessous.

Tableau 2

|  | ($F_{11}$) | ($F_{12}$) | ($F_{13}$) | ($F_{14}$) | ($F_{15}$) | ($F_{16}$) | ($F_{17}$) | ($F_{18}$) |
|---|---|---|---|---|---|---|---|---|
| $CaCl_2$ | 35 | 35 | 35 | 35 | 35 | 35 | 35 | 35 |
| Eau | 59,8 | 59,8 | 59,8 | 59,8 | 59,8 | 59,8 | 59,8 | 59,8 |
| Estisol™ 240 [1] | 0,2 | 0,2 | 0,2 | 0,2 | 0,2 | 0,2 | 0,2 | 0,2 |
| PEG 300 [2] | 5 | 0 | 0 | 0 | 0 | 0 | 0 | 0 |
| PEG 6000 [2] | 0 | 5 | 0 | 0 | 0 | 0 | 0 | 0 |
| ($X_1$) [2] | 0 | 0 | 5 | 0 | 0 | 0 | 0 | 0 |
| ($X_2$) [2] | 0 | 0 | 0 | 5 | 0 | 0 | 0 | 0 |
| ($X_0$) [2] | 0 | 0 | 0 | 0 | 5 | 0 | 0 | 0 |
| ($X_3$) [2] | 0 | 0 | 0 | 0 | 0 | 5 | 0 | 0 |
| ($X_5$) [2] | 0 | 0 | 0 | 0 | 0 | 0 | 5 | 0 |
| ($X_6$) [2] | 0 | 0 | 0 | 0 | 0 | 0 | 0 | 5 |

[1] : Estisol™ 240 est un agent anti-mousse commercialisé par la société Estichem.
[2] : La teneur en agent lubrifiant est exprimée en pourcentage massique de son extrait sec.

**A - 2) Compositions (C) dans lesquelles le sel (S) est le chlorure de potassium**

Chacune des compositions est préparée selon le même mode opératoire suivant :

- La quantité d'eau souhaitée est introduite sous agitation dans un réacteur maintenu à 20°C ; suivie de la quantité de chlorure de potassium souhaitée puis le mélange résultant agité pendant 30 minutes. Les autres ingrédients sont alors ajoutés successivement à 20°C et le tout agité jusqu'à obtention d'une solution limpide.

Les proportions, en pourcentages massiques, des constituants des compositions (C) ainsi obtenues, dénommées ci-après $(F_{22})$, $(F_{23})$, $(F_{24})$, $(F_{25})$, $(F_{26})$ et $(F_{27})$ ainsi que de la composition $(F_{21})$ selon l'état de la technique, sont consignées dans le tableau 3 ci-dessous.

Tableau 3

|  | $(F_{21})$ | $(F_{22})$ | $(F_{23})$ | $(F_{24})$ | $(F_{25})$ | $(F_{26})$ | $(F_{27})$ |
|---|---|---|---|---|---|---|---|
| KCl | 20 | 20 | 20 | 20 | 20 | 20 | 20 |
| Estisol™ 240 | 0,2 | 0,2 | 0,2 | 0,2 | 0,2 | 0,2 | 0,2 |
| Eau | 74,8 | 74,8 | 74,8 | 74,8 | 74,8 | 74,8 | 74,8 |
| PEG 300 [1] | 5 | 0 | 0 | 0 | 0 | 0 | 0 |
| $(X_1)$ [1] | 0 | 5 | 0 | 0 | 0 | 0 | 0 |
| $(X_2)$ [1] | 0 | 0 | 5 | 0 | 0 | 0 | 0 |
| $(X_0)$ [1] | 0 | 0 | 0 | 5 | 0 | 0 | 0 |
| $(X_3)$ [1] | 0 | 0 | 0 | 0 | 5 | 0 | 0 |
| $(X_4)$ [1] | 0 | 0 | 0 | 0 | 0 | 5 | 0 |
| $(X_5)$ [1] | 0 | 0 | 0 | 0 | 0 | 0 | 5 |
| (1) : la teneur en agent lubrifiant est exprimée en pourcentage massique de son extrait sec. | | | | | | | |

**A - 3) Compositions (C) dans lesquelles le sel (S) est un mélange de silicate de sodium et de carbonate de potassium**

Chacune des compositions $(F_{31})$, $(F_{32})$, $(F_{33})$ et $F_{(34)}$ est préparée selon le même mode opératoire suivant :

- La quantité d'eau souhaitée est introduite sous agitation dans un réacteur maintenu à 20°C ; suivie des quantités de silicate de sodium et de carbonate de potassium souhaitées puis le mélange résultant agité pendant 30 minutes. Les autres ingrédients sont alors ajoutés successivement à 20°C et le tout agité jusqu'à obtention d'une solution limpide.

Les proportions, en pourcentages massiques, des constituants des compositions (C) ainsi obtenues, dénommées ci-après $(F_{32})$, $(F_{33})$ et $(F_{34})$ ainsi que de la composition $(F_{31})$ selon l'état de la technique, sont consignées dans le tableau 4 ci-dessous.

Tableau 4

|  | $(F_{31})$ [2] | $(F_{32})$ | $(F_{33})$ | $(F_{34})$ |
|---|---|---|---|---|
| Silicate de sodium | 5 | 5 | 5 | 5 |
| $K_2CO_3$ | 3 | 3 | 3 | 3 |
| Estisol™ 240 | 0,2 | 0,2 | 0,2 | 0,2 |
| Eau | 88,8 | 88,8 | 88,8 | 88,8 |
| $(X_6)$ [1] | 3 | 0 | 0 | 0 |
| $(X_3)$ [1] | 0 | 3 | 0 | 0 |
| $(X_4)$ [1] | 0 | 0 | 3 | 0 |

(suite)

|  | $(F_{31})$ [2] | $(F_{32})$ | $(F_{33})$ | $(F_{34})$ |
|---|---|---|---|---|
| $(X_5)$ [1] | 0 | 0 | 0 | 3 |

(1) : La teneur en agent lubrifiant est exprimée en pourcentage massique de son extrait sec.

(2) : La composition $(F_{31})$ est divulguée dans la demande de brevet américain publiée sous le numéro US 2003/0232726 A1.

## B - Etude de la stabilité des compositions (C)

La stabilité des compositions (C) dont la préparation est exposée au paragraphe B) précédent ainsi que celle des compositions $(F_{11})$, $(F_{12})$, $(F_{18})$, $(F_{21})$ et $(F_{31})$ selon l'état de la technique a été étudiée comme suit :

- Une quantité identique de chacune des compositions (C) a été conservée dans une enceinte climatique isolée et régulée à une température de 20°C pendant un mois, durée à l'issue de laquelle l'aspect de ces échantillons a été évalué.
- Une quantité identique de chacune des compositions (C) a été conservée dans une enceinte climatique isolée et régulée à une température de 90°C pendant 16 heures pour évaluer leur vieillissement dans des conditions de forage en profondeur. L'aspect de chaque échantillon a été noté après une durée de 16 heures de conservation dans ces conditions.

Les résultats de ces évaluations sont consignés dans le tableau 5 ci-dessous ("Ho." : Aspect homogène; "He." : Aspect hétérogène).

|  | $(F_{11})$ | $(F_{12})$ | $(F_{13})$ | $(F_{14})$ | $(F_{15})$ | $(F_{16})$ | $(F_{17})$ | $(F_{18})$ |
|---|---|---|---|---|---|---|---|---|
| Aspect après un mois à 20°C | Ho. | Ho. | Ho. | Ho. | Ho. | Ho. | Ho. | Hé. |
| Aspect après 16h à 90°C | Ho. | Ho. | Ho. | Ho. | Ho. | Ho. | Ho. | Hé. |

Tableau 5

|  | $(F_{21})$ | $(F_{22})$ | $(F_{23})$ | $(F_{24})$ | $(F_{25})$ | $(F_{26})$ | $(F_{27})$ |
|---|---|---|---|---|---|---|---|
| Aspect après un mois à 20°C | Ho. | Ho. | Ho. | Ho. | Ho. | Ho. | Ho. |
| Aspect après 16h à 90°C | Ho. | Ho. | Ho. | Ho. | Ho. | Ho. | Ho. |

Tableau 5 (suite)

|  | $(F_{31})$ | $(F_{32})$ | $(F_{33})$ | $(F_{34})$ |
|---|---|---|---|---|
| Aspect après un mois à 20°C | Hé. | Ho. | Ho. | Ho. |
| Aspect après 16h à 90°C | Hé. | Ho. | Ho. | Ho. |

Tableau 5 (fin)

Ces évaluations font apparaître que les compositions (C) selon l'invention, présentent un aspect homogène dans les conditions de stockage des tests mis en oeuvre, alors que les compositions $(F_{18})$ et $(F_{31})$, comprenant le système lubrifiant $(X_6)$ divulgué dans la demande de brevet américain publiée sous le numéro US 2003/0232726, présentent un aspect hétérogène dans les mêmes conditions de stockage.

**C** - **Evaluation du pouvoir lubrifiant des compositions (C).**

**C - 1) Principe général de l'étude**

Le pouvoir lubrifiant est évalué à l'aide de l'appareil dénommé « E.P. (Extreme Pressure & Lubricity tester); 230V, 50 Hz Digital», commercialisé par la société OFITE (Instruction Manual Part 111-00-1), muni d'un anneau en rotation (référence OFITE 111-02) et d'un bloc fixe (référence OFITE 111-08). Les tests sont effectués selon les procédures recommandées par la norme RP 13B de l'Institut américain du pétrole (API), avec une vitesse de rotation de l'anneau de 60 tours par minute et avec les valeurs suivantes de moments de force appliqués entre l'anneau et le bloc fixe : 11,298 Nm (100 inch-pounds force) 16,948 Nm (150 inch-pounds force) et 22,597 Nm (200 inch-pounds force), selon les cas de figure. Dans ce système de mesure constant, plus la valeur du moment de force est élevée, plus la pression qui lui est associée sera élevée, et par conséquent, plus les forces de frottement sont intenses. Pour comparer les pouvoirs lubrifiants des différentes compositions :

- On note les lectures des graduations obtenues avec l'appareil de test ci-dessus décrit, correspondant à des valeurs relatives du couple de frottement entre l'anneau et le bloc ($V^{frot.}$) en présence desdites compositions dans les conditions expérimentales de test (le couple de frottement est une valeur sans unité, mesurée pour un moment de force spécifique exercé sur l'anneau par le bloc) ;
- On calcule la valeur d'un coefficient lubrifiant de la composition ($\lambda$) selon la formule suivante :

$$\lambda = (V^{frot.}/100) \times (V_{std.}^{frot.}/V_0^{frot.})$$

avec $V_{std.}^{frot.}$ représentant la valeur standard du couple de frottement de l'eau permutée qui, dans les conditions de mesures décrites, à savoir une vitesse de rotation de l'anneau de 60 tours/minute, est égale à 34 (manuel « Instruction Manual Part 111-00-1 de l'appareil E.P. (Extreme Pressure) & Lubricity tester ; 230V, 50 Hz Digital», commercialisé par la société OFITE) ; et $V_0^{frot.}$ la valeur expérimentale du couple de frottement de l'eau ;
- On calcule le pourcentage de réduction du couple de torsion ($\delta_{red}$), selon la formule suivante :

$$\delta_{red.} = [100 \times (\lambda_0 - \lambda)]/ \lambda_0$$

avec $\lambda_0$ représentant le coefficient lubrifiant de la base aqueuse.

Par « base aqueuse », on entend la solution comprenant de l'eau et la teneur en sel à la concentration massique souhaitée.

Selon le test expérimental décrit ci-dessus, plus la valeur relative du couple de frottement est faible, meilleur est le pouvoir lubrifiant de la composition testée.

L'amélioration du pouvoir lubrifiant d'une composition sera constatée:

- Lorsque la valeur relative du couple de frottement de la composition évaluée est plus faible que la valeur relative du couple de frottement de la base aqueuse telle que définie ci-dessus, et
- Par le pourcentage de réduction du couple de torsion de la composition évaluée.

**C - 2) Pouvoir lubrifiant de compositions à base de chlorure de calcium**

Les compositions ($F_{11}$), ($F_{12}$), ($F_{13}$), ($F_{14}$), ($F_{15}$), ($F_{16}$) et ($F_{17}$) sont évaluées par la procédure expérimentale décrite précédemment, avec une vitesse de rotation de l'anneau de 60 tours/minutes et une valeur de moment de force appliquée entre l'anneau et le bloc fixe de 11,298 Nm (100 inch-pound force) et comparées à de l'eau et à une solution aqueuse de chlorure de calcium à 35% massique (composition $T_1$).. Les résultats obtenus sont consignés dans le tableau 6 ci-dessous.

Tableau 6

|  | $V^{frot.}$ | $\lambda$ | $\delta_{red}$ |
|---|---|---|---|
| Eau | 32,4 | - | - |
| ($T_1$) | 17,5 | 0,184 | - |

(suite)

|        | $V^{frot.}$ | $\lambda$ | $\delta_{red}$ |
|--------|-------------|-----------|----------------|
| $(F_{11})$ | 11,4 | 0,120 | 35% |
| $(F_{12})$ | 14,0 | 0,147 | 20% |
| $(F_{13})$ | 7,5 | 0,079 | 57% |
| $(F_{14})$ | 12,1 | 0,127 | 31% |
| $(F_{15})$ | 0,5 | 0,005 | 97% |
| $(F_{16})$ | 1,13 | 0,012 | 93% |
| $(F_{17})$ | 1,13 | 0,012 | 93% |

Ces résultats font apparaître que les compositions $(F_{13})$, $(F_{14})$, $(F_{15})$, $(F_{16})$ et $(F_{17})$, comprenant respectivement les compositions $(X_1)$, $(X_2)$, $(X_0)$, $(X_3)$ et $(X_5)$, présentent des valeurs relatives du couple de frottement significativement inférieure à la valeur du couple de frottement de la composition $(T_1)$.

De plus, les compositions $(F_{13})$, $(F_{15})$, $(F_{16})$ et $(F_{17})$, présentent un pourcentage de réduction du couple de torsion par rapport à la composition $(T_1)$, supérieur au pourcentage de réduction du couple de torsion des compositions $(F_{11})$ et $(F_{12})$ comprenant des lubrifiants décrits dans l'état de la technique (en l'occurrence, les PEG 300 et PEG 6000).

**C - 3) Pouvoir lubrifiant de compositions à base de chlorure de potassium**

C - 3.1) Compositions n'ayant pas subi de vieillissement accéléré

Les compositions $(F_{21})$, $(F_{22})$, $(F_{23})$, $(F_{24})$, $(F_{25})$, $(F_{26})$ et $(F_{27})$, sont évaluées par la procédure expérimentale décrite au paragraphe D - 1) précédent, avec une vitesse de rotation de l'anneau de 60 tours/minutes et des valeurs de moments de force appliqués entre l'anneau et le bloc fixe de 11,298 Nm (100 inch-pounds force) 16,948 Nm (150 inch-pound force) et 22,957 Nm (200 inch-pound force) et comparées à de l'eau et à une solution aqueuse de chlorure de potassium à 20% massique (composition $T_2$).

Les résultats obtenus sont consignés dans le tableau 7 ci-dessous.

Tableau 7

|        | 11,298 N.m | | | 16,948 Nm | | | 22,597 Nm | | |
|--------|-------------|-----------|----------------|-------------|-----------|----------------|-------------|-----------|----------------|
|        | $V^{frot.}$ | $\lambda$ | $\delta_{red}$ | $V^{frot.}$ | $\lambda$ | $\delta_{red}$ | $V^{frot.}$ | $\lambda$ | $\delta_{red}$ |
| Eau    | 34 | - | - | 34,0 | - | - | 33,6 | - | - |
| $(T_2)$ | 15,7 | 0,157 | - | 21,4 | 0,214 | - | 27,9 | 0,283 | - |
| $(F_{21})$ | 8,2 | 0,082 | 47% | 14,5 | 0,145 | 32% | 21,3 | 0,216 | 24% |
| $(F_{22})$ | 5,2 | 0,052 | 67% | 8,4 | 0,084 | 61% | 11,7 | 0,118 | 58% |
| $(F_{23})$ | 8,3 | 0,083 | 47% | 11,5 | 0,115 | 46% | 14,3 | 0,145 | 49% |
| $(F_{24})$ | 8,6 | 0,086 | 45% | 12,4 | 0,124 | 42% | 15,6 | 0,158 | 45% |
| $(F_{25})$ | 6,3 | 0,063 | 60% | 9,1 | 0,091 | 57% | 12,3 | 0,125 | 56% |
| $(F_{26})$ | 3,4 | 0,034 | 79% | 6,7 | 0,067 | 69% | 12,1 | 0,123 | 57% |
| $(F_{27})$ | 5,8 | 0,058 | 63% | 9,2 | 0,092 | 57% | 12,0 | 0,121 | 57% |

C - 3.2) Compositions avant subi un vieillissement accéléré

Des échantillons de chacune des compositions $(F_{21})$, $(F_{22})$, $(F_{23})$, $(F_{24})$, $(F_{25})$, $(F_{26})$ et $(F_{27})$, ont été placés dans un four à rouleaux à une température de 120°C pendant 16 heures pour obtenir les compositions respectivement référencées $(F'_{21})$, $(F'_{22})$, $(F'_{23})$, $(F'_{24})$, $(F'_{25})$, $(F'_{26})$ et $(F'_{27})$. Ces conditions de stockage permettent de simuler les conditions de températures subies par un fluide forage lors de sa mise en œuvre dans un procédé de forage en grande profondeur. Ces dernières compositions sont ensuite évaluées par la procédure expérimentale décrite au paragraphe D-1) précédent, avec une vitesse de rotation de l'anneau de 60 tours/minutes et des valeurs de moments de force appliqués entre l'anneau et le bloc fixe de 11,298 Nm (100 inch-pounds force) 16,948 Nm (150 inch-pound force) et 22,957 Nm (200 inch-pound force), et comparées à de l'eau et à la solution aqueuse $T_2$.

Les résultats obtenus sont consignés dans le tableau 8 ci-dessous.

Tableau 8

| | 11,298 N.m | | | 16,948 Nm | | | 22,597 Nm | | |
|---|---|---|---|---|---|---|---|---|---|
| | $V^{frot.}$ | $\lambda$ | $\delta_{red}$ | $V^{frot.}$ | $\lambda$ | $\delta_{red}$ | $V^{frot.}$ | $\lambda$ | $\delta_{red}$ |
| Eau | 34,0 | - | - | 34 ,0 | - | - | 34,0 | - | - |
| $(T_2)$ | 17,5 | 0,175 | - | 25,3 | 0,253 | - | 32,9 | 0,329 | - |
| $(F'_{21})$ | 11,1 | 0,111 | 37% | 15,6 | 0,156 | 38% | 22,3 | 0,223 | 32% |
| $(F'_{22})$ | 3,5 | 0,037 | 79% | 6,6 | 0,066 | 74% | 9,5 | 0,095 | 71% |
| $(F'_{23})$ | 7,4 | 0,075 | 55% | 11,5 | 0,115 | 55% | 15,1 | 0,151 | 55% |
| $(F'_{24})$ | 6,2 | 0,062 | 65% | 9,6 | 0,096 | 62% | 12,6 | 0,126 | 62% |
| $(F'_{25})$ | 2,3 | 0,023 | 87% | 5,8 | 0,058 | 77% | 12,8 | 0,128 | 61% |
| $(F'_{26})$ | 2,9 | 0,029 | 83% | 3,7 | 0,037 | 85% | 12,3 | 0,123 | 63% |
| $(F'_{27})$ | 4,5 | 0,045 | 74% | 8,8 | 0,088 | 65% | 12,6 | 0,126 | 65% |

C-3.3) Analyse des résultats.

Les compositions $(F_{22})$, $(F_{23})$, $(F_{24})$, $(F_{25})$, $(F_{26})$ et $(F_{27})$, comprenant respectivement les compositions $(X_1)$, $(X_2)$, $(X_0)$, $(X_3)$, $(X_4)$ et $(X_5)$, et n'ayant pas été préalablement soumises à des conditions de vieillissement accélérées, présentent des valeurs relatives du couple de frottement significativement inférieures à la valeur du couple de frottement de la composition $(T_2)$, quelle que soit la valeur de la pression exercée dans la mise en œuvre du test d'évaluation.

Pour une valeur de moment de force, appliqué entre l'anneau et le bloc fixe égale à 11,298 N.m, les compositions $(F_{22})$, $(F_{25})$, $(F_{26})$ et $(F_{27})$, présentent des valeurs relatives du couple de frottement significativement inférieures à la valeur du couple de frottement de la composition $(F_{21})$ comprenant un agent lubrifiant décrit dans l'état de la technique (PEG 300).

Pour une valeur de moment de force, appliqué entre l'anneau et le bloc fixe égale à 16,948 N.m, les compositions $(F_{22})$, $(F_{23})$, $(F_{24})$, $(F_{25})$, $(F_{26})$ et $(F_{27})$, présentent des valeurs relatives du couple de frottement significativement inférieures à la valeur du couple de frottement de la composition $(F_{21})$ comprenant un agent lubrifiant décrit dans l'état de la technique (PEG 300).

Pour des valeurs de moments de force appliqués entre l'anneau et le bloc fixe égales à soit 11,298 Nm à 16,948 Nm et à 22,597 Nm, les compositions $(F'_{22})$, $(F'_{23})$, $(F'_{24})$, $(F'_{25})$, $(F'_{26})$ et $(F'_{27})$, comprenant respectivement les compositions $(X_1)$, $(X_2)$, $(X_0)$, $(X_3)$, $(X_4)$ et $(X_5)$, et ayant été préalablement soumises à des conditions de vieillissement accélérées, présentent des valeurs relatives du couple de frottement significativement inférieures à la valeur du couple de frottement de la composition $(T_2)$ et à la valeur du couple de frottement de la composition $(F_{21})$ comprenant un agent lubrifiant décrit dans l'état de la technique (PEG 300).

De plus, pour des valeurs de moments de force appliqués entre l'anneau et le bloc égales à 11,298 Nm et à 16,948 N.m, les compositions $(F'_{22})$, $(F'_{23})$, $(F'_{24})$, $(F'_{25})$, $(F'_{26})$ et $(F'_{27})$, présentent des valeurs relatives du couple de frottement inférieures aux valeurs du couple de frottement des compositions respectives $(F_{22})$, $(F_{23})$, $(F_{24})$, $(F_{25})$, $(F_{26})$ et $(F_{27})$, alors que dans les mêmes conditions opératoires, la composition $(F'_{21})$ de l'état de la technique, ayant été préalablement soumise à des conditions de vieillissement accélérées, présente une valeur relative du couple de frottement supérieure à celle de la composition $(F_{21})$ n'ayant pas été soumise à de telles conditions de vieillissement.

**C - 4) Etude du pouvoir lubrifiant de compositions de forage à base de silicate de sodium.**

Les compositions $(F_{41})$ et $(F_{42})$ sont préparées selon le mode opératoire suivant :

- La quantité d'eau souhaitée est introduite sous agitation dans un réacteur maintenu à 60°C ; suivie des quantités de silicate de sodium et de chlorure de sodium souhaitées puis le mélange résultant agité pendant 30 minutes pour obtenir d'une solution limpide. Les quantités souhaitées de Blanose™ 7H9, de Métolose™ 60SH50, de Rhodopol™ 23, de lubrifiant (dans le cas de $(F_{42})$), de bentonite, de baryte et d'Estisol™ 240 sont alors ajoutées successivement sous agitation, la température étant maintenue à 60°C et le mélange résultant est homogénéisé sous agitation jusqu'à l'obtention d'une solution homogène.

Le pH de la boue aqueuse est enfin ajusté à 11,0 par addition de soude sous agitation jusqu'à l'obtention d'une solution homogène.

Les proportions, en pourcentages massiques, des constituants des compositions $(F_{41})$ et $(F_{42})$ sont consignées dans le tableau 9 ci-dessous.

Tableau 9

| | $(F_{41})$ | $(F_{42})$ |
|---|---|---|
| Eau permutée | Qs 100% | Qs 100% |
| Rhodopol™ 23 [2] | 0,52% | 0,52% |
| Blanose™ 7H9 [3] | 0,025% | 0,025% |
| Métolose™ 60SH50 [4] | 0,375% | 0,375% |
| Colclay™ FG90 [5] | 2,0% | 2,0% |
| Silicate de sodium | 8,47% | 8,47% |
| Chlorure de sodium | 5,0% | 5,0% |
| Baryte | 9,3% | 9,3% |
| Estisol™ 240 [1] | 0,2% | 0,2% |
| (X4) [*] | 0% | 1,5% |
| Soude | qs pH = 11 | qs pH = 11 |

[1] : Estisol™ 240 : Agent anti-mousse commercialisé par la société Estichem.
[2] : Rhodopol™ 23 : Gomme xanthane utilisée comme agent viscosant et commercialisée par la société Rhodia.
[3] : Blanose™ 7H9 : Carboxyméthyl cellulose utilisée comme agent réducteur de filtrat et commercialisée par la société Aqualon.
[4] : Métolose™ 60SH50 : Hydroxypropylméthyl cellulose utilisée comme agent réducteur de filtrat et commercialisée par la société Aqualon.
[5] : Colclay™ FG90 : Bentonite utilisée comme agent épaississant inorganique et commercialisée par la société Minerais de la Méditerranée.
[*] : Teneur massique en extrait sec.

Des échantillons de chacune des compositions $(F_{41})$ et $(F_{42})$, ont été placés dans un four à rouleaux à une température de 120°C pendant 16 heures. Ces conditions de stockage permettent de simuler les conditions de températures subies par un fluide forage lors de sa mise en œuvre dans un procédé de forage en grande profondeur. Ces compositions sont ensuite évaluées par la procédure expérimentale décrite au paragraphe D-1) précédent, avec une vitesse de rotation de l'anneau de 60 tours/minutes et des valeurs de moments de force appliqués entre l'anneau et le bloc fixe de 16,948 Nm (150 inch-pound force) et comparées à de l'eau.

Les résultats obtenus sont consignés dans le tableau 10 ci-dessous.

Tableau 10

| | Aspect | $V^{frot.}$ | $\lambda$ | $\delta_{red}$ |
|---|---|---|---|---|
| Eau | Ho | 32,7 | 0,340 | - |
| $(F_{41})$ | Ho | 36,3 | 0,377 | - |
| $(F_{42})$ | Ho | 27,0 | 0,281 | 25% |

Dans les conditions expérimentales d'évaluation du pouvoir lubrifiant telles que décrites ci-dessus, la composition $(F_{42})$, ayant été préalablement soumises à des conditions de vieillissement accélérées et comprenant la composition lubrifiante $(X_4)$, présente une valeur relative du couple de frottement significativement inférieure à la valeur du couple de frottement de la composition ($F_{41}$) ne comprenant pas d'agent lubrifiant. De plus, la composition ($F_{42}$) permet de réduire le couple de torsion d'une valeur de 25% par rapport à la composition ($F_{41}$).

## D) Etude des propriétés inhibitrices de gonflement des argiles.

Les propriétés inhibitrices du gonflement des argiles sont mises en évidence selon une méthode consistant à évaluer les caractéristiques rhéologiques de dispersion de 5,7 grammes (soit 10 lb/bbl) de bentonite API dans 200 mL de phase aqueuse. Cette méthode, décrite dans l'article intitulé « Advances in inhibitive Water-Based drilling fluids - Can they replace oil-based muds » (Society of Petroleum Engineers, SPE 106476, 2007), comprend les étapes suivantes :

a) - La préparation des compositions aqueuses à tester
b) - Le calcul de leurs seuils d'écoulement à partir de la mesure des contraintes de cisaillement, à différents gradients de vitesse;
c) - L'ajout d'une quantité de 5,7 grammes (soit 10 lb/bbl) de bentonite API dans chacune des compositions aqueuses à tester ;
d) - Le stockage des compositions préparées à l'étape c) dans une étuve à rouleaux pendant 16 heures à 65°C (150°F) ;
e) - Le calcul des seuils d'écoulement des compositions aqueuses issues de l'étape d) ;
f) - Dans l'hypothèse où le seuil d'écoulement mesuré à l'étape e) n'évolue pas de façon significative, les étapes c), d) et e) sont appliquées à la composition concernée, de façon successive jusqu'à obtention d'une valeur du seuil d'écoulement significativement différente de celle obtenue à l'étape précédente.

Pour chaque composition expérimentale, le calcul du seuil d'écoulement met en œuvre une méthode adaptée de la norme API 13B-1 (« Recommended Practice for Field Testing Water-based Drilling Fluids), consistant à déterminer les propriétés rhéologiques de ladite composition, par la mesure des contraintes de cisaillement de ladite composition à différentes vitesses de rotation ($CS_v$).

Les mesures de viscosité nécessaires pour le calcul du seuil d'écoulement sont réalisées à l'aide de l'appareil « Speed Viscosimeter, Model 800 », équipé du rotor-stator R1B1, commercialisé par la société OFITE, à 20°C et à des vitesses de 600 tours/minute, de 300 tours/minute, de 200 tours/minute, de 100 tours/minute, de 60 tours/minute, de 30 tours/minute, de 6 tours/minute et de 3 tours/minute. A partir de ces mesures, l'expérimentateur calcule :

- La viscosité apparente (VA) selon la formule suivante :

$$VA = CS_{600} / 2$$

- La viscosité plastique (VP) selon la formule suivante :

$$VP = CS_{600} - CS_{300}$$

- Le seuil d'écoulement (SE) selon la formule suivante : SE = Viscosité à 300 tours/minute - VP

Les contrainte de cisaillement aux différentes vitesses sont mesurées en lb./100ft$^2$ et le seuil d'écoulement s'exprime aussi en lb./100ft$^2$ (en prenant en considération que 1 lb./100ft$^2$ = 0,0488 kg/m$^2$).

Les compositions aqueuses testées selon la méthode d'évaluation des propriétés inhibitrices du gonflement des argiles, sont référencées ($F_{51}$) et ($F_{52}$) et sont préparées selon le même mode opératoire suivant :

- La quantité d'eau souhaitée est introduite sous agitation dans un réacteur maintenu à 20°C, suivie de la quantité de chlorure de calcium souhaitée puis le mélange résultant agité pendant 30 minutes. Les autres ingrédients sont alors ajoutés successivement à 20°C et le tout agité jusqu'à obtention d'une solution limpide.

Les proportions, en pourcentages massiques, des constituants des compositions ($F_{51}$) et ($F_{52}$), sont consignées dans le tableau 11 ci-dessous.

Tableau 11

|  | $(F_{51})$ | $(F_{52})$ |
|---|---|---|
| $CaCl_2$ | 35% | 35% |
| Eau | Qs 100% | Qs 100% |
| Estisol™ 240[(1)] | 0% | 0,2% |
| $(X_4)$ | 0% | 5% |

Les valeurs des seuils d'écoulement mesurées, après chaque ajout d'une quantité de 10 lb/bbl (soit 5,7 grammes) de bentonite API dans chacune des compositions aqueuses $(F_{51})$ et $(F_{52})$ sont consignées dans le tableau 12 suivant :

Tableau 12

| | Eau | | $(F_{51})$ | | $(F_{52})$ | |
|---|---|---|---|---|---|---|
| | SE en : | | SE en : | | SE en : | |
| Bentonite ajoutée | lb./100ft² | kg.m⁻² | lb./100ft² | kg.m⁻² | lb./100ft² | kg.m⁻² |
| 10 lb/bbl (5,7g) | 1 | 0,0488 | 1 | 0,0488 | 1 | 0,0488 |
| 20 lb/bbl (11,4g) | 15 | 0,732 | 1 | 0,0488 | 1 | 0,0488 |
| 30 lb/bbl (17,1g) | 105 | 5,124 | 1 | 0,0488 | 1 | 0,0488 |
| 40 lb/bbl (22,8g) | n.d. | n.d. | 5 | 0,244 | 1 | 0,0488 |
| 50 lb/bbl (28,5g) | n.d. | n.d. | 10 | 0,488 | 1 | 0,0488 |
| 60 lb/bbl (34,2g) | n.d. | n.d. | 20 | 0,976 | 1 | 0,0488 |
| 70 lb/bbl (39,9g) | n.d. | n.d. | 25 | 1,220 | 1 | 0,0488 |
| 80 lb/bbl (45,6g) | n.d. | n.d. | 35 | 1,708 | 1 | 0,0488 |
| n.d. : non déterminé | | | | | | |

Dans les conditions expérimentales d'évaluation telles que décrites ci-dessus, on observe que le seuil d'écoulement de la composition $(F_{52})$, comprenant la composition $(X_4)$ selon l'invention, reste égal à 1 lb./100ft² (soit 0,0488 kg.m²) après l'ajout de 80 lb/bbl (soit 45,6g) de Bentonite API, alors que le seuil d'écoulement de la composition témoin $(F_{51})$ s'élève à 35 lb./100ft² (soit 1,708 kg.m⁻²). La composition $(X_4)$ procure donc des propriétés inhibitrices de gonflement des argiles à une composition aqueuse susceptible d'être utilisée dans un procédé de forage selon l'invention.

**E) Conclusions**

Les résultats exposés précédemment font apparaître que les fluides de forage aqueux comprenant des sels et au moins une composition $(C_1)$ représentée par la formule (I) telle que décrite précédemment, présentent une stabilité au stockage (homogénéité persistante), des propriétés d'inhibition du gonflement des argiles significatives, et un pouvoir lubrifiant amélioré par rapport aux fluides aqueux utilisés dans les procédés de forage de l'état de la technique.

**Revendications**

1. Composition $(C_{21})$ comprenant pour 100% de sa masse :

- De 5% à 100% massique d'un mélange $(M_1)$ consistant en, pour 100% de sa masse :

- De 25% à 78% massique d'une composition $(C_1)$ représentée par la formule (I) :

$$R_1\text{-}O\text{-}(G_1)_p\text{-}H \qquad (I)$$

dans laquelle $R_1$ représente le radical heptyle ou le radical 2-éthyl hexyle, $G_1$ représente le reste d'un sucre réducteur et p représente un nombre décimal supérieur ou égal à 1,05 et inférieur ou égal à 5, ladite composition ($C_1$) consistant en un mélange de composés représentés par les formules ($I_1$), ($I_2$), ($I_3$), ($I_4$) et ($I_5$) :

$$R_1\text{-O-}(G_1)_1\text{-H} \qquad (I_1),$$

$$R_1\text{-O-}(G_1)_2\text{-H} \qquad (I_2),$$

$$R_1\text{-O-}(G_1)_3\text{-H} \qquad (I_3),$$

$$R_1\text{-O-}(G_1)_4\text{-H} \qquad (I_4),$$

$$R_1\text{-O-}(G_1)_5\text{-H} \qquad (I_5),$$

dans les proportions molaires respectives $a_1$, $a_2$, $a_3$, $a_4$ et $a_5$, telles que la somme : $a_1 + a_2 + a_3 + a_4 + a_5$ est égale à 1 et la somme $a_1 + 2a_2 + 3a_3 + 4a_4 + 5a_5$ est égale à p ;
- De 20% à 50% massique d'une composition ($C_1$) représentée par la formule (I) dans laquelle $R_1$ représente le radical décyle,
- De 1% à 15% massique d'une composition ($C_1$) représentée par la formule (I) dans laquelle $R_1$ représente le radical dodécyle, et
- De 1% à 10% massique d'une composition ($C_1$) représentée par la formule (I) dans laquelle $R_1$ représente le radical tétradécyle.

- De 0% à 95% massique d'eau.

**2.** Composition ($C_{21}$) telle que définie à la revendication 1, **caractérisée en ce qu'**elle comprend en outre pour 100% de sa masse, de 0,1% à 30% massique d'au moins un agent auxiliaire choisi parmi l'érythritol, le xylitol, le sorbitol, le gluconate de sodium, le glucose et les maltodextrines.

**3.** Utilisation de la composition ($C_{21}$), telle que définie à l'une ou quelconque des revendications 1 ou 2, comme agent lubrifiant pour préparer une composition aqueuse (C), ladite composition (C) comprenant pour 100% de sa masse :

- De 1% à 65% massique d'au moins un sel (S) constitué par au moins un cation choisi parmi l'ion ammonium et les cations métalliques, et au moins un anion choisi parmi les ions chlorure, bromure, carbonate, bicarbonate, hydrogénocarbonate, silicate, métasilicate, sulfate, hydrogénosulfate, borate, tétraborate, dihydrogénoborate, hydrogénoborate, hydrogénotétraborate, ou les anions organiques portant une fonction carboxylate ;
- De 0,05% à 2% massique d'au moins un agent anti-mousse,
- De 13% à 97,95% massique d'eau et
- De 1% à 20% massique de ladite composition ($C_{21}$).

**4.** Utilisation telle que définie à la revendication 3, **caractérisée en ce que** dans la composition (C), le sel (S) est choisi parmi le chlorure de sodium, le chlorure de potassium, le chlorure de calcium, le carbonate de potassium, le bromure de calcium, le bromure de zinc, le silicate de sodium, le métasilicate de sodium ou le tétraborate de sodium.

**Patentansprüche**

**1.** Zusammensetzung ($C_{21}$), die auf 100 % ihrer Masse umfasst:

- 5 Masse-% bis 100 Masse-% einer Mischung ($M_1$), die zu 100 % ihrer Masse aus Folgendem besteht:

- 25 Masse-% bis 78 Masse-% einer Zusammensetzung ($C_1$), dargestellt durch die Formel (I):

$$R_1\text{-O-}(G_1)_p\text{-H} \qquad (I)$$

wobei $R_1$ das Heptylradikal oder das 2-Ethylhexylradikal darstellt, $G_1$ den Rest eines reduzierenden Zuckers darstellt und p eine Dezimalzahl größer oder gleich 1,05 und kleiner oder gleich 5 darstellt, wobei die

Zusammensetzung ($C_1$) aus einem Gemisch von Verbindungen besteht, dargestellt durch die Formeln ($I_1$), ($I_2$), ($I_3$), ($I_4$) und ($I_5$):

$$R_1\text{-O-}(G_1)_1\text{-H} \qquad (I_1),$$

$$R_1\text{-O-}(G_1)_2\text{-H} \qquad (I_2),$$

$$R_1\text{-O-}(G_1)_3\text{-H} \qquad (I_3),$$

$$R_1\text{-O-}(G_1)_4\text{-H} \qquad (I_4),$$

$$R_1\text{-O-}(G_1)_5\text{-H} \qquad (I_5),$$

in den jeweiligen molaren Anteilen $a_1$, $a_2$, $a_3$, $a_4$ und $a_5$ derart, dass die Summe: $a_1 + a_2 + a_3 + a_4 + a_5$ gleich 1 ist und die Summe $a_1 + 2a_2 + 3a_3 + 4a_4 + 5a_5$ gleich p ist;
- 20 Masse-% bis 50 Masse-% einer Zusammensetzung (C1), dargestellt durch die Formel (I), wobei R1 das Decylradikal darstellt,
- 1 Masse-% bis 15 Masse-% einer Zusammensetzung (C1), dargestellt durch die Formel (I), wobei R1 das Dodecylradikal darstellt,
- 1 Masse-% bis 10 Masse-% einer Zusammensetzung (C1), dargestellt durch die Formel (I), wobei R1 das Tetradecylradikal darstellt,
- 0 Masse-% bis 95 Masse-% Wasser.

**2.** Zusammensetzung ($C_{21}$) nach Anspruch 1, **dadurch gekennzeichnet, dass** sie weiter auf 100 % ihrer Masse 0,1 Masse-% bis 30 Masse-% mindestens eines Hilfsmittels umfasst, ausgewählt aus dem Erythrit, dem Xylit, dem Sorbit, dem Natriumgluconat, der Glucose und den Maltodextrinen.

**3.** Verwendung einer Zusammensetzung ($C_{21}$) nach einem der Ansprüche 1 oder 2 als Schmiermittel zur Herstellung einer wässrigen Zusammensetzung (C), wobei die Zusammensetzung (C) auf 100 % ihrer Masse umfasst:

- 1 Masse-% bis 65 Masse-% mindestens eines Salzes (S), das aus mindestens einem Kation, ausgewählt aus dem Ammonium-Ion und den Metallkationen, und mindestens einem Anion besteht, ausgewählt aus den Chlorid-, Bromid-, Carbonat-, Bicarbonat-, Hydrogencarbonat-, Silikat-, Metasilikat-, Sulfat-, Hydrogensulfat-, Borat-, Tetraborat-, Dihydrogenborat-, Hydrogenborat-, Hydrogentetraborat-Ionen oder den organischen Anionen, die eine Carboxylatfunktion tragen;
- 0,05 Masse-% bis 2 Masse-% mindestens eines Antischaummittels,
- 13 Masse-% bis 97,95 Masse-% Wasser und
- 1 Masse-% bis 20 Masse-% der Zusammensetzung (C21).

**4.** Verwendung nach Anspruch 3, **dadurch gekennzeichnet, dass** in der Zusammensetzung (C) das Salz (S) ausgewählt ist aus dem Natriumchlorid, dem Kaliumchlorid, dem Calciumchlorid, dem Kaliumcarbonat, dem Calciumbromid, dem Zinkbromid, dem Natriumsilikat, dem Natriummetasilikat oder dem Natriumtetraborat.

## Claims

**1.** Composition ($C_{21}$) comprising, for 100 % of the mass thereof:
from 5 % to 100 % by mass of a mixture ($M_1$) consisting of, for 100 % of the mass thereof:

- from 25 % to 78 % by mass of a composition ($C_1$) represented by the formula (I):

$$R_1\text{-O-}(G_1)_p\text{-H} \qquad (I)$$

in which $R_1$ represents the heptyl radical or the 2-ethyl hexyl radical, $G_1$ represents the remainder of a reducing sugar and p represents a decimal number greater than or equal to 1.05 and less than or equal to 5, said composition ($C_1$) consisting of a mixture of compounds represented by the formulae ($I_1$), ($I_2$), ($I_3$), ($I_4$) and ($I_5$):

$$R_1\text{-O-}(G_1)_1\text{-H} \qquad (I_1),$$

$$R_1\text{-O-}(G_1)_2\text{-H} \qquad (I_2),$$

$$R_1\text{-O-}(G_1)_3\text{-H} \qquad (I_3),$$

$$R_1\text{-O-}(G_1)_4\text{-H} \qquad (I_4),$$

$$R_1\text{-O-}(G_1)_5\text{-H} \qquad (I_5),$$

in the respective molar proportions $a_1$, $a_2$, $a_3$, $a_4$ and $a_5$, such that the sum: $a_1 + a_2 + a_3 + a_4 + a_s$ is equal to 1 and the sum $a_1 + 2a_2 + 3a_3 + 4a_4 + 5a_5$ is equal to p;

- from 20 % to 50 % by mass of a composition $(C_1)$ represented by the formula (I) wherein $R_1$ represents the decyl radical,
- from 1% to 15 % by mass of a composition $(C_1)$ represented by the formula (I) wherein $R_1$ represents the dodecyl radical, and
- from 1% to 10 % by mass of a composition $(C_1)$ represented by the formula (I) wherein $R_1$ represents the tetradecyl radical.

- from 0 % to 95 % by mass of water.

2. Composition $(C_{21})$ as defined in claim 1, **characterised in that** it further comprises, for 100 % of the mass thereof, from 0.1 % to 30 % by mass of at least one auxiliary agent selected from erythritol, xylitol, sorbitol, sodium gluconate, glucose and maltodextrins.

3. Use of the composition $(C_{21})$ as defined in either claim 1 or claim 2, as a lubricant for preparing an aqueous composition (C), said composition (C) comprising, for 100 % of the mass thereof:

- from 1 % to 65 % by mass of at least one salt (S) constituted by at least one cation selected from among ammonium ion and metal cations, and at least one anion selected from among chloride, bromide, carbonate, bicarbonate, hydrogen carbonate, silicate, metasilicate, sulphate, hydrogen sulphate, borate, tetraborate, dihydrogen borate, hydrogen borate and hydrogen tetraborate ions, or organic anions having a carboxylate function;
- from 0.05 % to 2 % by mass of at least one anti-foaming agent,
- from 13 % to 97.95 % by mass of water, and
- from 1% to 20 % by mass of a composition $(C_2)$.

4. Use as defined in claim 3, **characterised in that**, in the composition (C), the salt (S) is chosen from among sodium chloride, potassium chloride, calcium chloride, potassium carbonate, calcium bromide, zinc bromide, sodium silicate, sodium metasilicate or sodium tetraborate.

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5837655 A
- WO 2007146067 A2
- US 20050197255 A1
- WO 0029519 A1
- US 5007489 A
- US 5807811 A
- US 20030232726 A1
- US 20030232726 A

**Littérature non-brevet citée dans la description**

- **DANIEL VOET ; JUDITH G. VOET.** Biochemistry. John Wyley & Sons, 1990, 250
- Advances in inhibitive Water-Based drilling fluids - Can they replace oil-based muds. *Society of Petroleum Engineers, SPE 106476,* 2007